(19) Europäisches Patentamt
European Patent Office
Office européen des brevets

(11) **EP 3 330 680 B1**

(12) **FASCICULE DE BREVET EUROPEEN**

(45) Date de publication et mention de la délivrance du brevet:
**02.03.2022 Bulletin 2022/09**

(21) Numéro de dépôt: **17202086.9**

(22) Date de dépôt: **16.11.2017**

(51) Classification Internationale des Brevets (IPC):
**G01F 1/684** (2006.01) **G01F 5/00** (2006.01)
**G01F 15/02** (2006.01) *G01F 1/36* (2006.01)

(52) Classification Coopérative des Brevets (CPC):
**G01F 1/684; G01F 5/00; G01F 15/022;** G01F 1/36;
G01F 1/6847

(54) **DEBITMETRE THERMIQUE MASSIQUE**

THERMISCHES MASSENDURCHFLUSSMESSGERÄT

THERMAL MASS FLOW METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2016 FR 1661418**

(43) Date de publication de la demande:
**06.06.2018 Bulletin 2018/23**

(73) Titulaire: **Sagemcom Energy & Telecom SAS**
**92500 Rueil-Malmaison (FR)**

(72) Inventeurs:
• **SABATIER, Pierre**
**92500 Rueil Malmaison (FR)**
• **ALEGRE, Thierry**
**92500 Rueil Malmaison (FR)**

(74) Mandataire: **Lavaud, Thomas et al**
**Cabinet Boettcher**
**16, rue Médéric**
**75017 Paris (FR)**

(56) Documents cités:
US-A- 4 264 961        US-A1- 2010 286 931
US-A1- 2012 035 866        US-A1- 2013 092 257

EP 3 330 680 B1

## Description

L'invention concerne le domaine des débitmètres thermiques massiques.

ARRIERE PLAN DE L'INVENTION

Le débitmètre thermique massique constitue une solution éprouvée et relativement économique pour mesurer un débit d'un fluide.

A titre d'exemple, le document US 2010/0286931 A1 divulgue un débitmètre massique pour déterminer le débit d'un fluide en combinant le signal provenant d'un capteur de pression et le signal provenant d'un capteur thermique selon l'art antérieur à l'invention.

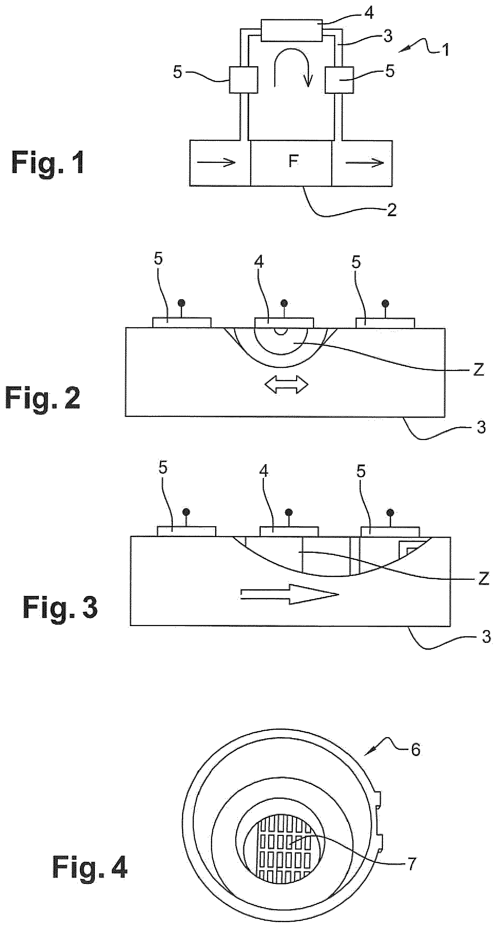

En référence à la figure 1, un tel débitmètre 1, destiné à mesurer un débit d'un fluide F circulant dans une canalisation principale 2, comporte classiquement une canalisation de mesure 3 montée en dérivation de la canalisation principale 2. La canalisation de mesure 3 comprend une résistance chauffante 4 et deux thermistances 5 situées de chaque côté de la résistance chauffante 4.

En référence à la figure 2, dans le cas où le débit est nul dans la canalisation principale (et donc dans la canalisation de mesure 3), la zone de fluide chauffée Z est symétrique, et les deux thermistances 5 mesurent une même température.

En référence à la figure 3, dans le cas où le débit est non nul dans la canalisation principale (et donc dans la canalisation de mesure 3), la zone de fluide chauffée Z se déforme sous l'effet du débit. Les deux thermistances 5 mesurent alors des températures différentes.

La différence de température obtenue est fonction du débit, selon l'équation suivante :
$RI^2 = Q_m(h_2 - h_1) = Q_m C_p(t_2 - t_1)$, où :

- $C_p$ est une capacité thermique massique à pression constante (en J.kg$^{-1}$.K$^{-1}$ ;
- $Q_m$ est un débit massique (en kg.s$^{-1}$) ;
- $h_2$ et $h_1$ sont des enthalpies massiques (en J.kg$^{-1}$) ;
- R est une valeur de résistance de la résistance chauffante (en $\Omega$) ;
- I est un courant circulant dans la résistance chauffante (en A) ;
- $t_2$ et $t_1$ sont les températures mesurées par les thermistances (en K).

Cette méthode de mesure du débit nécessite que le rapport entre le débit du fluide circulant dans la canalisation principale 2 et le débit du fluide circulant dans la canalisation de mesure 3 soit constant. Pour assurer qu'un certain débit circule bien dans la canalisation de mesure 3, on utilise classiquement un organe déprimogène positionné entre une entrée et une sortie de la canalisation de mesure. L'organe déprimogène produit une restriction de section qui permet d'assurer une différence de pression entre l'entrée et la sortie de la canalisation de mesure 3, sous l'effet de laquelle le fluide est conduit à cheminer dans la canalisation de mesure 3.

En référence à la figure 4, un tel organe déprimogène 6 comporte classiquement une ouverture et une grille 7 positionnées au centre de l'organe déprimogène 6.

Un débitmètre thermique massique est très sensible à l'empoussièrement. Une accumulation de poussière tend à encrasser et à boucher partiellement la grille 7 de l'organe déprimogène 6, ce qui fausse les mesures sans qu'il soit possible de détecter que les mesures sont faussées.

Ce phénomène est peu gênant lorsque le débitmètre thermique massique est utilisé dans un contexte industriel qui autorise la mise en œuvre d'opérations de maintenance régulières pour nettoyer la grille. Ce phénomène est par contre très problématique dans le cas où le débitmètre thermique massique est destiné à être installé chez un particulier. En effet, dans ce cas, le débitmètre thermique massique doit fonctionner pendant une durée typique de vingt ans sans qu'aucune opération de maintenance ne soit réalisée.

OBJET DE L'INVENTION

L'invention a pour objet de faciliter l'intégration d'un débitmètre thermique massique chez un particulier.

RESUME DE L'INVENTION

En vue de la réalisation de ce but, on propose un débitmètre thermique massique destiné à mesurer un débit d'un fluide circulant dans une canalisation principale, le débitmètre thermique massique comportant :

- une première canalisation de mesure qui a une entrée et une sortie reliées à la canalisation principale et qui est pourvue de deux capteurs de températures et de moyens de chauffage du fluide entre les deux capteurs ;
- un organe déprimogène situé dans la canalisation principale entre l'entrée et la sortie de la première canalisation de mesure ;
- un dispositif de mesure de pression destiné à produire des mesures de pression différentielle régnant dans la canalisation principale entre un point amont et un point aval situés respectivement en amont et en aval de l'organe déprimogène ;
- une unité de traitement reliée aux capteurs de température pour produire des mesures de débit à partir de mesures de température produites par les capteurs de température et au dispositif de mesure de pression pour corriger les mesures de débit en fonction des mesures de pression différentielle.

La correction réalisée par l'unité de traitement permet d'éliminer ou de limiter l'influence sur les mesures de débit d'accidents, tels qu'un empoussièrement, qui surviennent dans la canalisation principale. La correction est réalisée alors que le débitmètre est en fonctionnement chez l'utilisateur, et ne nécessite aucune opération de maintenance.

On propose aussi un procédé de mesure d'un débit utilisant un débitmètre thermique massique tel que celui qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

- la figure 1 représente un débitmètre thermique massique selon l'art antérieur ;
- la figure 2 représente une canalisation de mesure du débitmètre thermique massique selon l'art antérieur alors que le débit mesuré est nul ;
- la figure 3 est une figure équivalente à la figure 2, alors que le débit mesuré est non nul ;
- la figure 4 représente un organe déprimogène du débitmètre thermique massique selon l'art antérieur ;
- la figure 5 représente un débitmètre thermique massique selon l'invention ;
- la figure 6 représente un capteur de pression différentielle du débitmètre thermique massique selon l'invention.

DESCRIPTION DETAILLEE DE L'INVENTION

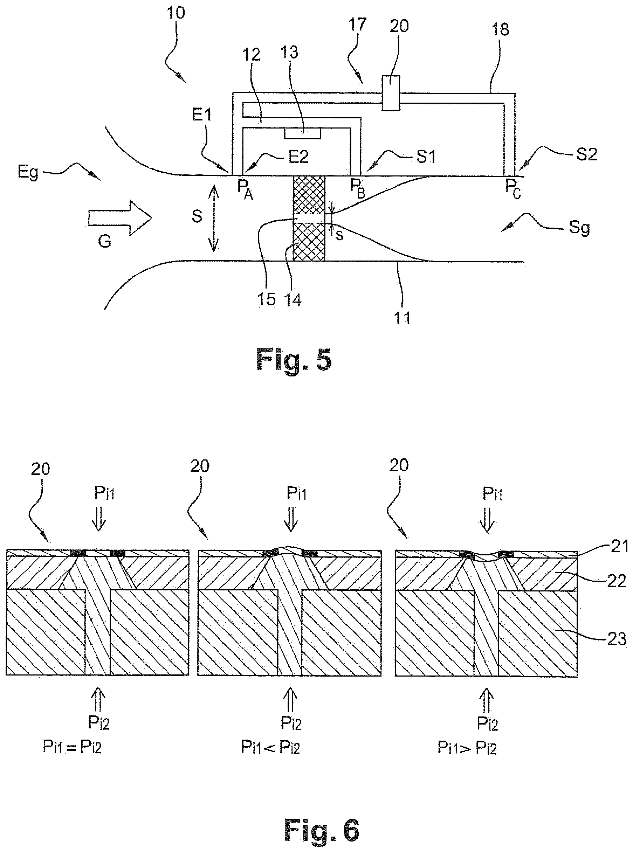

En référence à la figure 5, le débitmètre thermique massique selon l'invention 10 est ici destiné à mesurer un débit d'un gaz G qui circule dans un tuyau.

Le débitmètre 10 comporte une canalisation principale 11 comprenant une entrée de gaz Eg et une sortie de gaz Sg. La canalisation principale 11 est raccordée au tuyau et présente une section S égale à celle du tuyau, de sorte que le débit du gaz G dans la canalisation principale 11, au travers de l'entrée de gaz Eg et de la sortie de gaz Sg, est égal au débit du gaz G dans le tuyau.

Le débitmètre 10 comporte une première canalisation de mesure 12 comprenant une entrée E1 et une sortie S1.

Un boîtier de mesure 13 est positionné dans la première canalisation de mesure 12. Le boîtier de mesure 13 comporte une première thermistance, une deuxième thermistance, une résistance chauffante et une unité de traitement. La première thermistance, la deuxième thermistance, la résistance chauffante et l'unité de traitement sont intégrés dans le boîtier de mesure 13 sur un même substrat silicium, ce qui permet de réduire le coût de fabrication du boîtier de mesure 13 et donc du débitmètre 10.

La résistance chauffante, destinée à réchauffer le gaz qui circule dans la première canalisation de mesure 12, est positionnée entre la première thermistance et la deuxième thermistance.

L'unité de traitement comporte des moyens matériels (ou *hardware,* en anglais) et des moyens logiciels (ou *software,* en anglais).

Les moyens matériels comprennent un composant électronique « intelligent » (par exemple, un microcontrôleur ou un FPGA) et divers autres composants électroniques actifs et passifs, parmi lesquels un pont de Wheatstone et un amplificateur d'instrumentation.

Les moyens logiciels comprennent des moyens de correction.

Le débitmètre 10 comporte de plus un organe déprimogène 14 situé dans la canalisation principale 11 entre l'entrée E1 et la sortie S1 de la première canalisation de mesure 12. L'organe déprimogène 14 est par exemple (mais pas nécessairement) semblable à celui de la figure 4. L'organe déprimogène 14 présente ici une ouverture 15 de section s positionnée au centre de l'organe déprimogène 14.

Le débitmètre 10 comporte en outre un dispositif de mesure de pression 17 qui produit des mesures de pression différentielle régnant dans la canalisation principale 11 entre un point amont et un point aval situés respectivement en amont et en aval de l'organe déprimogène 14.

Les termes « amont » et « aval » s'interprètent ici en considérant que le gaz G circule depuis l'entrée de gaz Eg vers la sortie de gaz Sg.

Le dispositif de mesure de pression 17 comporte ici une deuxième canalisation de mesure 18 comprenant une entrée E2 et une sortie S2.

Le point amont est donc situé au niveau de l'entrée E2 de la deuxième canalisation de mesure 18 et le point aval est donc situé au niveau de la sortie S2 de la deuxième canalisation de mesure 18. Le point amont (et donc l'entrée E2 de la deuxième canalisation de mesure 18) est situé au niveau de l'entrée E1 de la première canalisation de mesure 12. Le point aval (et donc la sortie S2 de la deuxième canalisation de mesure 18) est situé en aval de la sortie S1 de la première canalisation de mesure 12.

On sait que l'utilisation de tout type d'organe déprimogène résulte en une perte de charge non récupérable qui dépend du type de l'organe déprimogène. Le point aval est ici positionné à une distance de l'organe déprimogène 14 suffisante pour que la différence de pression entre le point aval et un point situé en amont de l'organe déprimogène 14 corresponde à une perte de charge résiduelle due à l'organe déprimogène 14.

Le dispositif de mesure de pression 17 comporte en outre un capteur de pression différentielle 20. Le capteur de pression différentielle 20 est lui aussi intégré sur le substrat silicium du boîtier de mesure 13.

Le capteur de pression différentielle 20 est mieux visible sur la figure 6.

Le capteur de pression différentielle 20 comporte une membrane 21 équipée de jauges de contrainte, une cellule silicium 22 et un socle en pyrex 23. Le capteur de pression différentielle 20 mesure la différence de pression entre les pressions incidentes Pi1 et Pi2 appliquées sur chaque face de la membrane 21.

Les jauges de contraintes permettent de mesurer de très faibles niveaux de pression différentielle.

Les jauges de contraintes sont connectées au pont de Wheatstone de l'unité de traitement du boîtier de mesure 13. Les mesures de pression différentielle sont ainsi réalisées et acquises par l'unité de traitement via l'amplificateur d'instrumentation.

On explique maintenant le principe du fonctionnement du débitmètre 10.

L'unité de traitement du boîtier de mesure 13 acquiert des mesures de températures produites par la première thermistance et par la deuxième thermistance de la première canalisation de mesure 12, et génère des mesures de débit du gaz G circulant dans la canalisation principale 11 à partir de ces mesures de température.

Les moyens de correction corrigent les mesures de débit du gaz G en fonction des mesures de pression différentielle réalisées par le capteur de pression différentielle 20 du dispositif de mesure de pression 17.

On sait en effet que le débit de gaz G mesuré via la première canalisation de mesure 12 est fonction de la différence de pression $\Delta P_{ab}=P_b-P_a$ entre l'entrée E1 de la première canalisation de mesure 12, où la pression est égale à $P_a$, et la sortie S1 de la première canalisation de mesure 12, où la pression est égale à $P_b$.

En effet, l'application de la loi de Bernouilli donne :

$$1/2.\, \rho.C_a^2+P_a+\rho.g.Z_a=1/2.\rho.C_b^2+P_b+\rho.g.Z_b,\ où :$$

- $\rho$ est la masse volumique du gaz (en kg.m$^{-3}$) ;
- $C_a$ est la vitesse d'écoulement du gaz à l'entrée du la première canalisation de mesure 12 (en m.s$^{-1}$) ;
- $P_a$ est la pression à l'entrée de la première canalisation de mesure 12 (en Pa) ;
- $g$ est la valeur de l'intensité de la pesanteur (en N.kg$^{-1}$) ;
- $Z_a$ est la valeur de l'altitude à l'entrée de la première canalisation de mesure 12 (en m) ;
- $\rho$ est la masse volumique du gaz (en kg.m$^{-3}$ ;
- $C_b$ est la vitesse d'écoulement du gaz à l'entrée du la première canalisation de mesure (en m.s$^{-1}$) ;
- $P_b$ est la pression à la sortie de la première canalisation de mesure 12 (en Pa) ;
- $g$ est la valeur de l'intensité de la pesanteur (en N.kg$^{-1}$) ;
- $Z_b$ est la valeur de l'altitude à la sortie de la première canalisation de mesure 12 (en m).

En négligeant les différences d'altitude, la différence de pression $\Delta P_{ab}$ peut donc être exprimée ainsi :

$$\Delta P_{ab}=1/2.\,\rho.(C_b^2-C_a^2).$$

On sait par ailleurs que :

$$Q_v=U_{ma}.S=U_{mb}.s,$$

où $Q_v$ est un débit volumique du gaz, S est la section de la canalisation principale 11, s est la section de l'ouverture 15 de l'organe déprimogène 14, et $U_{mx}$ est la vitesse moyenne du gaz G en un point X.

Or, comme $Q_v$ est constant, on obtient :

$$\Delta P_{ab}=1/2 . \; \rho . Q_v{}^2 . (1/S^2-1/s^2) ,$$

soit :

$$\Delta P_{ab}=1/2 . \; \rho . (Q_v/S)^2 . (1/R^2-1) ,$$

avec R=s/S, soit :

$$\Delta P_{ab}=f(1/R^2) .$$

L'unité de traitement produit donc des mesures d'un débit du gaz G, qui est proportionnel à la différence de pression $\Delta P_{ab}$ qui est fonction de R, et qui, en l'occurrence, varie en fonction du carré du rapport entre les sections S et s.

Le dispositif de mesure de pression 17, quant à lui, mesure la pression différentielle $\Delta P_{ac}$ entre le point aval et le point amont. La pression différentielle $\Delta P_{ac}$ est donc égale à la différence entre la pression $P_c$ à la sortie S2 de la deuxième canalisation de mesure 18 (soit au point aval) et entre la pression $P_a$ à l'entrée E2 de la deuxième canalisation de mesure 18 (soit au point amont, ou à l'entrée E1 de la première canalisation de mesure 12).

Or, la pression différentielle $\Delta P_{ac}=P_c-P_a$ correspond à une perte de charge singulière résultant d'un accident modifiant géométriquement la canalisation principale 11. Un tel accident est par exemple un empoussièrement qui bouche partiellement la grille et réduit donc la section s de l'ouverture de l'organe déprimogène 14.

Il est connu qu'une perte de charge singulière, telle que la perte de charge singulière $\Delta P_{ac}$, peut être exprimée par :

$$\Delta P_{ac}= \alpha . \xi . \rho . v^2 ,$$

où $\alpha$ est un coefficient de proportionnalité, v est la vitesse moyenne du gaz, $\rho$ est la masse volumique du gaz, et $\xi$ est un coefficient sans dimension dépendant du rapport entre les sections s et S. Le coefficient $\xi$ est issu de tables décrivant les pertes de charges singulières, et dépend de la nature de l'accident pris en compte.

L'unité de traitement acquiert ainsi les mesures de pression différentielle $\Delta P_{ac}$, qui varient en fonction du rapport entre les sections s et S, et qui prennent en compte la perte de charge singulière résultant d'un accident modifiant géométriquement la canalisation principale, tel qu'une accumulation de poussière.

Les moyens de correction produisent alors un facteur correctif à partir des mesures de la différence de pression $\Delta P_{ab}$ et des mesures de pression différentielle $\Delta P_{ac}$.

Pour produire le facteur correctif, les moyens de correction calculent un paramètre de perte de charge, qui varie en fonction de l'importance de l'accident qui tend à réduire la section s, comparent le paramètre de perte de charge à une valeur de référence, et déduisent de cette comparaison le facteur correctif.

Le paramètre de perte de charge est par exemple le rapport $\Delta P_{ab}/\Delta P_{ac}$, ou la différence $\Delta P_{ab}-\Delta P_{ac}$.

La valeur de référence est soit une valeur théorique, soit une valeur obtenue par une opération de calibration réalisée au cours de la fabrication du débitmètre 10.

Avantageusement, une calibration en trois points, effectuée sur 100% des débitmètres d'une ligne de fabrication permet d'accroître significativement la précision de la correction en supprimant les erreurs dues aux tolérances de fabrication des différents composants formant le débitmètre 10.

On illustre ce qui vient d'être décrit avec un exemple dans lequel la canalisation principale 11 présente une section circulaire, et dans lequel l'organe déprimogène 14 est du type plaque à trou.

On désigne par D le diamètre de la canalisation principale 11, par d le diamètre du trou de l'organe déprimogène 14, avec d/D=0,8, et par Qv le débit volumique du gaz.

En réutilisant les équations présentées plus tôt, on obtient :

$$\Delta P_{ab}=P_b-P_a$$
$$=-(2\rho . ((1-d^2)/D^2)Q_v{}^2)/(\pi d^2)$$

$$= -(2.\rho.Q_v{}^2).(0,497-0,204.D^4)/D^2$$
$$= -0,64.\rho.Q_v{}^2((1-d^4)/d^2).$$

$$\Delta P_{ac} = P_c - P_a$$
$$= -\xi.\rho.v2/(2.g)$$
$$= -0,0135.\rho.Qv2/d4,$$

où $\xi$ est un coefficient sans dimension dépendant du rapport d/D tiré de tables décrivant les pertes de charges singulières.

L'empoussièrement va conduire à une réduction du diamètre d.

Si d=1, alors $\Delta P_{ab}-\Delta P_{ac}=0,0135.\rho.Q_v{}^2$.

Si d=0,8, alors $\Delta P_{ab}-\Delta P_{ac}=0,327.\rho.Q_v{}^2$.

Le débit dans la première canalisation de mesure 12 étant proportionnel à $\Delta P_{ab}$, la comparaison de $\Delta P_{ab}$ et de $\Delta P_{ac}$ permet bien de mesurer la réduction du diamètre de passage due à l'empoussièrement, et donc de réaliser une correction des mesures de débit.

Bien entendu, l'invention n'est pas limitée au mode de réalisation décrit mais englobe toute variante entrant dans le champ de l'invention telle que définie par les revendications.

En particulier, il est possible d'utiliser des capteurs de températures autres que des thermistances, des moyens de réchauffement autres qu'une résistance chauffante, et un capteur de pression différentielle autre qu'un capteur à jauges de contrainte. Il est d'ailleurs possible, à la place du capteur de pression différentielle, d'utiliser une pluralité de capteurs de pression non différentielle.

De même, l'ensemble des composants évoqués (thermistances, capteur de pression différentielle, etc.) peuvent très bien ne pas être intégrés sur un même substrat, et même ne pas être positionnés dans un même boîtier.

L'organe déprimogène peut avoir une forme différente de celle présentée ici.

## Revendications

1. Procédé de mesure d'un débit utilisant un débitmètre thermique massique destiné à mesurer un débit d'un fluide (G) circulant dans une canalisation principale (11), le débitmètre thermique massique comportant :

   - une première canalisation de mesure (12) qui a une entrée (E1) et une sortie (S1) reliées à la canalisation principale et qui est pourvue de deux capteurs de températures et de moyens de chauffage du fluide entre les deux capteurs ;
   - un organe déprimogène (14) situé dans la canalisation principale entre l'entrée et la sortie de la première canalisation de mesure (12) ;
   - un dispositif de mesure de pression (17) destiné à produire des mesures de pression différentielle régnant dans la canalisation principale entre un point amont et un point aval situés respectivement en amont et en aval de l'organe déprimogène (14) ;

   le procédé de mesure comportant les étapes de :

   - produire une mesure de débit grâce aux capteurs de température ;
   - produire une mesure de pression différentielle grâce au dispositif de mesure de pression ; le procédé de mesure étant **caractérisé en ce qu'**il comporte en outre
   - une étape consistant à évaluer, à partir de la mesure de débit, une différence de pression entre l'entrée et la sortie de la première canalisation de mesure;
   - produire un facteur correctif à partir de la différence de pression évaluée à l'étape précédente et de la mesure de pression différentielle, le facteur correctif permettant de corriger une perte de charge dans la canalisation principale;
   - corriger la mesure de débit grâce au facteur correctif.

2. Procédé de mesure selon la revendication 1, dans lequel le facteur correctif est obtenu à partir d'un rapport entre la différence de pression et la mesure de pression différentielle.

**3.** Procédé de mesure selon la revendication 1, dans lequel le facteur correctif est obtenu à partir d'une différence entre la différence de pression et la mesure de pression différentielle.

**4.** Procédé de mesure selon la revendication 1, comportant en outre une étape de calibration, réalisée au cours d'une fabrication du débitmètre thermique massique, consistant à évaluer une valeur de référence à partir d'une mesure de débit et d'une mesure de pression différentielle, le facteur correctif étant produit en tenant compte de la valeur de référence.

**5.** Procédé de mesure selon la revendication 1, dans lequel le dispositif de mesure de pression comporte une deuxième canalisation de mesure (18) ayant une entrée (E2) au point amont et une sortie (S2) au point aval, et un capteur de pression différentielle (20) positionné dans la deuxième canalisation de mesure.

**6.** Procédé de mesure selon la revendication 5, dans lequel le point amont est situé au niveau de l'entrée de la première canalisation de mesure et le point aval est situé en aval de la sortie de la première canalisation de mesure.

**7.** Procédé de mesure selon la revendication 5, dans lequel le capteur de pression différentielle (20) est un capteur à jauges de contrainte.

**8.** Débitmètre thermique massique destiné à mesurer un débit d'un fluide (G) circulant dans une canalisation principale (11), comportant :

- une première canalisation de mesure (12) qui a une entrée (E1) et une sortie (S1) reliées à la canalisation principale et qui est pourvue de deux capteurs de températures et de moyens de chauffage du fluide entre les deux capteurs ;
- un organe déprimogène (14) situé dans la canalisation principale entre l'entrée et la sortie de la première canalisation de mesure (12) ;
- un dispositif de mesure de pression (17) destiné à produire des mesures de pression différentielle régnant dans la canalisation principale entre un point amont et un point aval situés respectivement en amont et en aval de l'organe déprimogène (14) ;
- une unité de traitement reliée aux capteurs de température et au dispositif de mesure de pression ;

le débitmètre thermique massique étant **caractérisé en ce qu'**il est agencé pour mettre en œuvre le procédé de mesure selon l'une des revendications précédentes.

**Patentansprüche**

**1.** Verfahren zum Messen einer Durchflussmenge, das einen thermischen Massendurchflussmesser verwendet, der dazu bestimmt ist, eine Durchflussmenge eines Fluids (G) zu messen, das in einer Hauptleitung (11) fließt, wobei der thermische Massendurchflussmesser umfasst:

- eine erste Messleitung (12), die einen Einlass (E1) und einen Auslass (S1) hat, die mit der Hauptleitung verbunden sind, und die mit zwei Temperatursensoren und zwischen den beiden Sensoren mit Heizmitteln zum Erwärmen des Fluids versehen ist;
- ein Drosselorgan (14), das sich in der Hauptleitung zwischen dem Einlass und dem Auslass der ersten Messleitung (12) befindet;
- eine Druckmessvorrichtung (17), die dazu bestimmt ist, Messungen eines Differenzdruckes zu erzeugen, der in der Hauptleitung zwischen einem stromaufwärtigen Punkt und einem stromabwärtigen Punkt herrscht, die sich stromaufwärts bzw. stromabwärts des Drosselorgans (14) befinden;

wobei das Messverfahren die Schritte umfasst:

- Erzeugen einer Durchflussmengenmessung mittels der Temperatursensoren;
- Erzeugen einer Differenzdruckmessung mittels der Druckmessvorrichtung;

wobei das Messverfahren **dadurch gekennzeichnet ist, dass** es ferner umfasst:

- einen Schritt, der darin besteht, anhand der Durchflussmengenmessung eine Druckdifferenz zwischen dem Einlass und dem Auslass der ersten Messleitung zu evaluieren;
- einen Korrekturfaktor anhand der im vorhergehenden Schritt evaluierten Druckdifferenz und der Differenzdruckmessung zu erzeugen, wobei der Korrekturfaktor ein Korrigieren eines Lastverlusts in der Hauptleitung ermöglicht;
- Korrigieren der Durchflussmengenmessung mittels des Korrekturfaktors.

2. Messverfahren nach Anspruch 1, bei dem der Korrekturfaktor aus einem Verhältnis zwischen der Druckdifferenz und der Differenzdruckmessung erhalten wird.

3. Messverfahren nach Anspruch 1, bei dem der Korrekturfaktor aus einer Differenz zwischen der Druckdifferenz und der Differenzdruckmessung erhalten wird.

4. Messverfahren nach Anspruch 1, ferner umfassend einen Kalibrationsschritt, der während einer Herstellung des thermischen Massendurchflussmessers durchgeführt wird und darin besteht, einen Referenzwert anhand einer Durchflussmengenmessung und einer Differenzdruckmessung zu evaluieren, wobei der Korrekturfaktor unter Berücksichtigung des Referenzwertes erzeugt wird.

5. Messverfahren nach Anspruch 1, bei dem die Druckmessvorrichtung eine zweite Messleitung (18) umfasst, die einen Einlass (E2) am stromaufwärtigen Punkt und einen Auslass (S2) am stromabwärtigen Punkt umfasst, und einen in der zweiten Messleitung positionierten Differenzdrucksensor (20).

6. Messverfahren nach Anspruch 5, bei dem sich der stromaufwärtige Punkt im Bereich des Einlasses der ersten Messleitung befindet und sich der stromabwärtige Punkt stromabwärts des Auslasses der ersten Messleitung befindet.

7. Messverfahren nach Anspruch 5, bei dem der Differenzdrucksensor (20) ein Dehnungsmessstreifen-Sensor ist.

8. Thermischer Massendurchflussmesser, der dazu bestimmt ist, eine Durchflussmenge eines Fluids (G) zu messen, das in einer Hauptleitung (11) fließt, umfassend:

- eine erste Messleitung (12), die einen Einlass (E1) und einen Auslass (S1) hat, die mit der Hauptleitung verbunden sind, und die mit zwei Temperatursensoren und zwischen den beiden Sensoren mit Heizmitteln zum Erwärmen des Fluids versehen ist;
- ein Drosselorgan (14), das sich in der Hauptleitung zwischen dem Einlass und dem Auslass der ersten Messleitung (12) befindet;
- eine Druckmessvorrichtung (17), die dazu bestimmt ist, Messungen des Differenzdruckes zu erzeugen, der in der Hauptleitung zwischen einem stromaufwärtigen Punkt und einem stromabwärtigen Punkt herrscht, die sich stromaufwärts bzw. stromabwärts des Drosselorgans (14) befinden;
- eine Verarbeitungseinheit, die mit den Temperatursensoren und der Druckmessvorrichtung verbunden ist;

wobei der thermische Massendurchflussmesser **dadurch gekennzeichnet ist, dass** er ausgebildet ist, um das Messverfahren nach einem der vorhergehenden Ansprüche durchzuführen.

**Claims**

1. A method of measuring a flow rate using a thermal mass flowmeter for measuring a flow rate of a fluid (G) flowing in a main duct (11), the thermal mass flowmeter comprising:

- a first measurement duct (12) having an inlet (E1) and an outlet (S1) connected to the main duct and provided with two temperature sensors and means for heating the fluid between the two sensors;
- a pressure-drop member (14) situated in the main duct between the inlet and the outlet of the first measurement duct (12); and
- a pressure measurement device (17) for producing measurements of differential pressure existing in the main duct between an upstream point and a downstream point situated respectively upstream and downstream from the pressure-drop member (14);

the measurement method comprising the steps of:

- producing a flow rate measurement by using the temperature sensors;
- producing a differential pressure measurement by using the pressure measurement device;

the measurement method being **characterized in that** it also comprises:

- a step of using the flow rate measurement to evaluate a pressure difference between the inlet and the outlet of the first measurement duct;
- producing a correction factor from the pressure difference evaluated at the previous step and from the differential pressure measurement, the correction factor allowing to correct a head loss in the main duct;
- correcting the flow rate measurement by using the correction factor.

2. A measurement method according to claim 1, wherein the correction factor is obtained from a ratio between the pressure difference and the differential pressure measurement.

3. A measurement method according to claim 1, wherein the correction factor is obtained from a difference between the pressure difference and the differential pressure measurement.

4. A measurement method according to claim 1, further including a calibration step performed during fabrication of the thermal mass flowmeter and consisting in evaluating a reference value from a flow rate measurement and a differential pressure measurement, the correction factor being produced while taking account of the reference value.

5. A measurement method according to claim 1, wherein the pressure measurement device includes a second measurement duct (18) having an inlet (E2) at the upstream point and an outlet (S2) at the downstream point, with a differential pressure sensor (20) positioned in the second measurement duct.

6. A measurement method according to claim 5, wherein the upstream point is situated at the inlet of the first measurement duct and the downstream point is situated downstream from the outlet of the first measurement duct.

7. A measurement method according to claim 5, wherein the differential pressure sensor (20) is a strain gauge sensor.

8. A thermal mass flowmeter for measuring a flow rate of a fluid (G) flowing in a main duct (11), the flowmeter comprising:

- a first measurement duct (12) having an inlet (E1) and an outlet (S1) connected to the main duct and provided with two temperature sensors and means for heating the fluid between the two sensors;
- a pressure-drop member (14) situated in the main duct between the inlet and the outlet of the first measurement duct (12);
- a pressure measurement device (17) for producing measurements of differential pressure existing in the main duct between an upstream point and a downstream point situated respectively upstream and downstream from the pressure-drop member (14); and
- a processor unit connected to the temperature sensors and to the pressure measurement device;

the thermal mass flowmeter being **characterized in that** it is arranged to perform the measurement method according to any preceding claim.

Fig. 1

Fig. 2

Fig. 3

Fig. 4

**Fig. 5**

$P_{i1} = P_{i2}$   $P_{i1} < P_{i2}$   $P_{i1} > P_{i2}$

**Fig. 6**

**EP 3 330 680 B1**

## RÉFÉRENCES CITÉES DANS LA DESCRIPTION

**Documents brevets cités dans la description**

- US 20100286931 A1